# EUROPEAN PATENT APPLICATION

(11) **EP 1 378 842 A2**
(43) Date of publication of application: **07.01.2004**
(21) Application number: 02013012.6
(22) Date of filing: 12.06.2002
(51) Int. Cl.: G06F 17/60

(54) **Method and system for scheduling appointment according to real-time information**

(30) Priority: 05.09.2001 US 948164
(71) Applicant: Agilent Technologies Inc. (a Delaware Corporation), Palo Alto, CA 94306-2024 (US)
(72) Inventor: Peskin, Christopher A. c/o Agielent Techno., Inc., Loveland, CO80537-0599 (US); Carlson, Gregory F., Corvallis, OR 97330 (US); Price, Carl W., Corvallis, OR 97330 (US)
(74) Representative: Schoppe, Fritz, Dipl.-Ing.

(57) **Abstract**

A method for augmenting an event-based appointment in an electronic scheduler (100) in real-time includes retrieving an appointment data associated with an appointment (604). The appointment data includes an event trigger (408) and one or more event actions (410) depending on the event trigger (408). The method also includes acquiring event-related information based on the event trigger (606), where the event-related information is capable of determining if the event trigger is satisfied. The method further includes determining if the acquired event-related information satisfies the event trigger (608); and in response to determining that the event trigger is satisfied, performing the one or more event actions (610). A portable electronic scheduler (100) suitable to accompany a user of the portable electronic scheduler includes a storage device (116) and a module (106) coupled to the storage device (116). The storage device (116) is configured to store event information (400), and the storage device (116) stores data corresponding to an event, wherein the data includes an event trigger (408) and one or more event actions (410) depending on the event trigger (408). The module (106) is operable to obtain event-related information based on the event trigger (408), operable to determine if the event trigger (408) is satisfied, and operable to initiate the performance of the one or more event actions (410) in response to determining that the event trigger (408) is satisfied.

## Description

### BACKGROUND

### Field

The present invention relates generally to the field of appointment and scheduling systems and, more particularly, to the use of real-time information to dynamically augment appointment and schedule information.

### Description of the Related Art

Electronic organizers, such as personal digital assistants (PDAs), are becoming more and more common in today's society. The PDA is essentially a portable computer, typically handheld, that has special capabilities. People use an electronic organizer to store and maintain scheduling information, to-do lists, address and telephone lists, and the like.

One application provided with many electronic organizers is a scheduler or appointment application (e.g., an electronic daily planner). The scheduler application enables a user to store and maintain a daily schedule based on time. The scheduler application then reminds or alerts the user of his or her scheduled appointments. For example, a person can create an entry for a scheduled staff meeting at three o'clock next Monday. The scheduler application then reminds the person of the scheduled staff meeting, for example, starting from one hour prior to the meeting time. The typical electronic organizer sounds a short alarm (e.g., beeping noise) as a reminder and the organizer continues to periodically trigger the reminder until the person turns off the reminder.

A drawback with conventional electronic organizers is that it only permits its user to make schedule entries that are based on time. In contrast, more and more activities are based on or associated with places or events. Conventional electronic organizers do not provide its user the ability to create an entry that is based on an event, such as "the next time I see Bob," "the next time I'm at the grocery store," and the like. Presently, a person cannot use conventional electronic schedulers to be reminded of something the next time the person is at a certain place or when an event occurs.

Another disadvantage with many conventional electronic organizers is that it keeps on triggering the reminder until the user deactivates the reminder. For example, even if the person is at the scheduled staff meeting, the electronic organizer still triggers the reminder. Thus, the user of the electronic organizer is inconvenienced with having to deactivate the reminder for the staff meeting, sometimes while the meeting is in progress. Alternatively, the person can deactivate the reminder function in the electronic organizer. But, this is undesirable because the person may forget about the scheduled event and will not be reminded by the electronic organizer.

### SUMMARY

The present invention provides an apparatus and corresponding methods that incorporate real-time information in providing event-based appointment scheduling functions. The event-based appointments may or may not include a time/date parameter. For example, the event-based appointments can use time as an appointment reminder trigger (e.g., an appointment at two o'clock) or can use some other "event" than time/date as the appointment reminder trigger (e.g., "I want to go skiing the next good powder day"). The apparatus includes components and program logic to maintain information regarding one or more such event-based appointments.

The apparatus also includes components and program logic to acquire and/or obtain real-time information/data and adapt the real-time information/data to augment one or more event-based appointments. The real-time information may include information such as, by way of example, geographical location, proximity location (e.g., proximity to other devices), traffic conditions, weather conditions, time, and the like. The apparatus can then use the acquired real-time information or event to augment the event-based appointments.

For purposes of summarizing the invention, certain aspects, advantages, and novel features of the invention have been described herein. It is to be understood that not necessarily all such advantages may be achieved in accordance with any one particular embodiment of the invention. Thus, the invention may be embodied or carried out in a manner that achieves or optimizes one advantage or group of advantages as taught herein without necessarily achieving other advantages as may be taught or suggested herein.

In one embodiment, a method for augmenting an event-based appointment in an electronic scheduler in real-time includes: retrieving an appointment data associated with an appointment, the appointment data having an event trigger and one or more event actions depending on the event trigger; acquiring event-related information based on the event trigger, the event-related information capable of determining if the event trigger is satisfied; determining if the acquired event-related information satisfies the event trigger; and in response to determining that the event trigger is satisfied, performing the one or more event actions.

In another embodiment, a method for transmitting a notification to one or more meeting attendees includes: retrieving a meeting data associated with a scheduled meeting, the meeting data provided by a user of a portable electronic scheduler, the meeting data having a meeting time, meeting location, and one or more meeting attendees; determining a present geographical location of the user based on the location of the user's portable electronic scheduler; determining whether the present geographical location matches the meeting location; determining whether the present time is substantially the meeting time; in response to determining that the present geographical location does not match the meeting location or that the present time is not substantially the meeting time, determining the user's movement parameters; determining an estimated time of arrival at the meeting location, the estimated time of arrival determined from the user's present geographical location and the user's movement parameters; determining whether the estimated time of arrival is past the meeting time; and in response to determining that the estimated time of arrival is past the meeting time, notifying the one or more meeting attendees.

In still another embodiment, a portable electronic scheduler suitable to accompany a user of the portable electronic scheduler includes a storage device and a module coupled to the storage device. The storage device is configured to store event information, and the storage device stores data corresponding to an event, wherein the data includes an event trigger and one or more event actions depending on the event trigger. The module is operable to obtain event-related information based on the event trigger, operable to determine if the event trigger is satisfied, and operable to initiate the performance of the one or more event actions in response to determining that the event trigger is satisfied.

In yet another embodiment, a computer-readable storage medium has stored thereon computer instructions that, when executed by a portable electronic scheduler, cause the portable electronic scheduler to: retrieve an appointment data associated with an appointment, the appointment data having an event trigger and an event action depending on the event trigger; acquire event-related information based on the event trigger, the event-related information capable of determining if the event trigger is satisfied; determine if the acquired event-related information satisfies the event trigger; and in response to determining that the event trigger is satisfied, perform the event action depending from the event trigger.

These and other embodiments of the present invention will also become readily apparent to those skilled in the art from the following detailed description of the embodiments having reference to the attached figures, the invention not being limited to any particular embodiment(s) disclosed.

### BRIEF DESCRIPTION OF THE DRAWINGS

Figure 1 illustrates exemplary components of an electronic scheduler, according to one embodiment.

Figure 2 illustrates an exemplary contact table, according to one embodiment.

Figure 3 illustrates an exemplary location table, according to one embodiment.

Figure 4 illustrates an exemplary event-based appointment table, according to one embodiment.

Figure 5 illustrates an exemplary user interface for entering an event-based appointment, according to one embodiment.

Figure 6 illustrates a flow chart of an exemplary method for augmenting event-based appointment schedules with real-time information.

Figure 7 illustrates a flow chart of an exemplary method for augmenting schedule data in real-time, according to one embodiment.

Figure 8 illustrates a flow chart of an exemplary method for augmenting schedule data and notifying the appointment destination in real-time, according to one embodiment.

Figure 9 illustrates a flow chart of an exemplary method for generating an event-based appointment reminder, according to one embodiment.

### DETAILED DESCRIPTION

An electronic scheduler, according to an embodiment of the present invention, provides its user the ability to maintain event-based appointments and schedules that may or may not include a time/date component or parameter. The electronic scheduler provides for the maintaining and management of appointments that may use some other "event" other than time/date as the appointment reminder trigger (albeit, time/date may be a component, but not necessarily required). The electronic scheduler also augments the appointments (time-based event or otherwise) with acquired or obtained data or information, such as, by way of example, position, weather, traffic, and other information depending on a particular event-based appointment.

In one embodiment, the electronic scheduler provides its user the ability to schedule activities that are not based on time. The electronic organizer enables its user to create an entry (event-based appointment) that is based on an event, where the specified event or events operate as the appointment or schedule activity trigger. The electronic scheduler acquires data and information based on the scheduled event and augments the event-based appointment using the acquired information. For example, a user can schedule an event reminder entry such as "the next time I see Bob, remind him to return my video." The electronic scheduler can then use proximity or location information to alert the user about this reminder the next time "Bob" is near. For example, Bob may be carrying his own electronic scheduler, or other portable electronic device, which is capable of detection and identification by the user's electronic scheduler. This allows the user's electronic scheduler to determine when Bob and, more particularly, Bob's electronic scheduler is near. Thus, the electronic scheduler provides a desirable function to its user.

As another example, a user can schedule an event reminder entry such as "I want to go skiing the next good powder day." The user may additionally provide one or more ski resorts of interest. Alternatively, the electronic scheduler can determine one or more ski resorts based on one or more factors, such as, by way of example, distance, popularity, accessibility, and the like. The electronic scheduler can then acquire skiing condition information from one or more ski resorts and notify the user when the snow conditions are good. For example, the electronic scheduler can use wireless communication technology (e.g., WAP cellular technology) to obtain the snow conditions at the one or more ski resorts.

As still another example, a user can schedule a tee time at a golf course and create an entry in the electronic scheduler to cancel the tee time if it is raining on the day of the scheduled tee time. This is an event that is triggered by weather conditions. The electronic scheduler can then acquire the necessary event information (e.g., the weather conditions on the day of the scheduled tee time) and, based on the acquired information, modify or augment the scheduled event-based appointment as necessary. For example, if it is raining on the day of the scheduled tee time, the user can have the electronic scheduler automatically cancel the scheduled tee time (the event-based appointment). The electronic scheduler can use wireless or cellular technology to obtain the necessary event information and to provide the appointment augmentation functions.

In another embodiment, the electronic scheduler incorporates the real-time physical position or geographical location information in providing event-based appointment augmentation functions. For example, the electronic scheduler can use geographical location and time information to determine that the user is at the location of a scheduled activity (e.g., appointment or meeting) at or substantially near the scheduled activity time and, accordingly, turn off a reminder function in the electronic scheduler.

As another example, the electronic scheduler can use geographical location information and other data, such as motion vectors, time, and traffic information, to remind the user of a scheduled activity at a certain calculated time sufficient for the user to arrive on time at the destination (e.g., activity location). The electronic scheduler can also alert the user if it determines that the user is going to be late for a scheduled activity, and may even be instructed to automatically inform others involved in the activity (e.g., who and/or what the activity is with) that the user will be late. "Activity," "appointment," and "meeting" are used interchangeably herein. The electronic scheduler may also include in its alerts an estimated time of arrival.

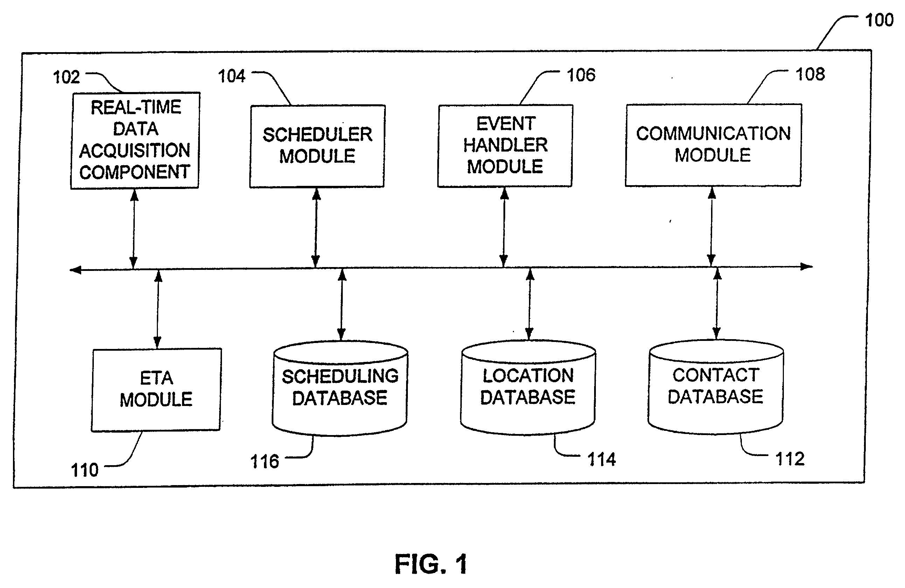

Figure 1 illustrates exemplary components of an electronic scheduler 100, according to one embodiment. As depicted, electronic scheduler 100 includes a real-time data acquisition component 102, a scheduler module 104, an event hander module 106, a communication module 108, an eta module 110, a contact database 112, a location database 114, and a scheduling database 116. Real-time data acquisition component 102, modules 104, 106, 108, and 110, and databases 112, 114, and 116 are coupled. As used herein, the terms "connected," "coupled," or any variant thereof, means any connection or coupling, either direct or indirect, between two or more elements; the coupling or connection between the elements can be physical, logical, or a combination thereof.

The depicted components and modules may communicate with each other and other components comprising electronic scheduler 100 through mechanisms such as, by way of example, interprocess communication, procedure and function calls, application program interfaces, and other various program interfaces. Furthermore, the functionality provided for in the components, modules, and databases may be combined into fewer components, modules, or databases or further separated into additional components, modules, or databases. In some embodiments, one or more of the functions provided by the modules, components, and databases may be optional and not implemented or present in electronic scheduler 100.

In one embodiment, electronic scheduler 100 is a combination of a portable computing device, such as, by way of example, a personal digital assistant (PDA), and a real-time data acquisition component. Electronic scheduler 100 is portable and mobile, and of a size to permit it to be carried by its user. Electronic scheduler 100, in addition to other components, includes a processor and memory. The memory stores one or more application programs that are capable of executing on the processor, and data that is manipulated by the one or more programs. For example, electronic scheduler 100 may provide application programs that enable its user to maintain addresses and phone numbers, appointments and schedules, and to-do lists. Electronic scheduler 100 also includes a data input device, such as a keyboard, microphone, and/or a pen or stylus, and a data output device, such as a display screen and/or a speaker. Electronic scheduler 100 may also include a synchronization mechanism that allows electronic scheduler 100 to couple to a computing device, such as, by way of example, a personal computer, and receive appointment and schedule data.

In one embodiment, real-time data acquisition component 102 contains program logic and components to acquire data and information that is used to augment the appointment schedules maintained on electronic scheduler 100. Real-time data acquisition component 102 acquires appointment or event-related information, and this information is used to augment the event-based appointment schedule functions. For example, real-time data acquisition component 102 can contain program logic to acquire other data and information, such as, by way of example, geographic location, proximity location, weather reports and/or conditions, traffic conditions, airline schedule information, sports information, financial information, and other data that may be used to augment event-based appointment schedules. Real-time data acquisition component 102 can include program logic to communicate with remote devices (e.g., web sites) in acquiring the data and information necessary to augment appointment schedules.

In one embodiment, real-time data acquisition component 102 contains program logic and components to determine the relative position or geographic location of electronic scheduler 100. Because a user typically carries his or her electronic scheduler 100, the geographic location of electronic scheduler 100 is analogous to the geographic location of its user. For example, real-time data acquisition component 102 can include a global positioning system (GPS) receiver and its corresponding software. GPS is a navigational system that utilizes satellite signals to fix the location of a GPS receiver on or above the earth's surface. The GPS receiver receives the radio positioning signals that provide three-dimensional position, velocity, and time information from several satellites. The GPS receiver uses the received signals to determine its location.

In another embodiment, real-time data acquisition component 102 contains program logic to determine a proximate or relative location. For example, real-time data acquisition component 102 can include components and program logic that provide communication capability that conforms to the Bluetooth specification. As is appreciated by those of ordinary skill in the art, the Bluetooth technology specification provides interoperability guidelines to facilitate communication between electronic devices that conform to the Bluetooth specification. Bluetooth specifies a short-range, wireless (e.g., radio) networking protocol for connecting various devices, such as electronic scheduler 100. Furthermore, the Bluetooth specification defines power levels that facilitate communication between Bluetooth conformant devices over a limited distance. Bluetooth conformant devices automatically establish networks with other Bluetooth conformant devices that are within range. Thus, the Bluetooth conformant devices need to be near each other to communicate.

Real-time data acquisition component 102 may include a receiver and a transmitter that conforms to the Bluetooth standard. The receiver may function to listen on a specific channel for requests to identify electronic scheduler 100. The transmiter can periodically transmit requests for other Bluetooth conformant devices to transmit its identification. The transmitter can also transmit identification data in response to the receiver receiving a request to identify electronic scheduler 100. Thus, real-time data acquisition component 102 may identify other electronic schedulers 100, as well as other electronic devices that are coupled to Bluetooth compliant transmitters and receivers, which come within range or proximity of electronic scheduler 100.

In still another embodiment, real-time data acquisition component 102 can include components and program logic that conform to GPS and Bluetooth specifications. The GPS component identifies the physical position or geographic location and the Bluetooth component identifies other Bluetooth conformant devices that are within Bluetooth transmission range. In yet other embodiments, real-time data acquisition component 102 may include components and program logic that conform to and support other geographic positioning and wireless communication standards and technologies, such as, by way of example, future positioning and navigational systems, cellular communication technologies, and the like.

Scheduler module 104 generally functions to provide a user a scheduling application that executes on electronic scheduler 100. Scheduler module 104 contains program logic to provide an application that a user can use to maintain his or her schedule. For example, scheduler module 104 provides an interface through which the user can enter data regarding one or more appointments. Scheduler module 104 receives and stores the input data on one or more storage devices coupled to electronic scheduler 100. Scheduler module 104 then processes the data to generate reminders to the user about his or her scheduled appointments or to augment the user's scheduled appointments. Scheduler module 104 also provides the user the ability to alter previously entered schedule data.

Event handler module 106 generally functions to incorporate real-time information into the schedule data maintained on electronic scheduler 100 as disclosed herein. Event handler module 106 contains program logic to receive real-time information (e.g., geographic or proximity location information, financial information, weather conditions, etc.) from real-time data acquisition component 102 and to alter and/or supplement the operation and functionality of scheduler module 104. Event handler module 106 can determine from the schedule data the event-related information that is needed to augment the scheduling features. Event handler module 106 can utilize real-time data acquisition component 102 to acquire or obtain some or all of the event-related information.

As an example, event handler module 106 may determine from the schedule data stored on electronic scheduler 100 that the user has a three o'clock appointment. Starting at a time prior to the scheduled appointment time, event handler module 106 can periodically issue a request to real-time data acquisition component 102 to determine the user's geographical location. The time may be a predetermined time (e.g., one hour prior to a scheduled time) or may be variable and calculated from the current time, the user's physical position or location, the location of the scheduled appointment, weather and travel conditions, and the like. Event handler module 106 can then use the geographical location information to enhance and supplement the operation of scheduler module 104.

For example, event handler module 106 can determine that the user is already at the destination of the scheduled appointment on or about the scheduled appointment time and accordingly turn off the alarm or notification function provided by electronic scheduler 100. Alternatively, event handler module 106 may determine from the present geographical location information and other data, such as, by way of example, current time, current weather, traffic condition, direction and velocity of movement, and the like, that the user is likely to be late for the scheduled appointment. Event handler module 106 may use eta module 110 to calculate the user's estimated arrival time at the destination, and ask whether the user wants to notify the destination (e.g., other meeting attendees, the person or persons with whom the appointment is with, etc.) that the user is going to be late.

As another example, event handler module 106 may determine from the schedule data stored on electronic scheduler 100 that the user has an event-based appointment. The event-based appointment may be to display a shopping list on a coupled display device the next time the user is at a grocery store. Event handler module 106 can periodically issue a request to real-time data acquisition component 102 to determine the user's geographical location. Event handler module 106 can use the geographical location information to determine if the user is at or in the proximity of the grocery store specified in the event-based appointment. If the user is at or in the proximity of the specified grocery store, event handler module 106 can display the shopping list, or other data or information, associated with the event.

Communication module 108 generally functions to provide connectivity between electronic scheduler 100 and one or more other electronic devices, including one or more other electronic schedulers 100, web sites, communication devices, and the like. In one embodiment, communication module 108 facilitates wireless communications. Communication module 108 contains components and program logic to establish a wireless connection and to communicate over the wireless connection with one or more other devices. Communication module 108 also contains program logic to support data and information transfer (e.g., email, file transfer, voice communication, etc.) over the wireless connection.

Communication module 108 contains components and program logic to establish a wireless connection over, for example, a telephony or cellular network to devices, such as a telephone, facsimile machine, computer, another electronic scheduler 100, and the like. Communication module 108 may transmit a message to the remote device over the wireless connection. For example, communication module 108 may receive and process a request from event handler module 106 to notify one or more meeting attendees that a user (e.g., user of electronic scheduler 100) is going to be late for a scheduled meeting. Communication module 108 may establish a connection with one or more electronic schedulers 100 in the possession of the one or more meeting attendees, respectively, and transmit a message alerting the one or more meeting attendees that the user is going to be late. The message may be, for example, a recorded voice message, an email or text message, and the like.

In another example, communication module 108 may establish a telephone call to a telephone or fax machine located at the meeting location and transmit a message (e.g., voice, data, electronic, etc.) that the user is going to be late. Communication module 108 also contains components and program logic to establish wireless communication and network connections requested by one or more other electronic devices, including one or more other electronic schedulers 100.

Eta module 110 generally functions to calculate or determine an estimated arrival time for a user to reach a particular destination. Eta module 110 facilitates the calculation of an estimated time of arrival at a particular destination from factors or parameters such as, by way of example, the user's current location, the velocity of travel, the direction of travel, current weather conditions, current traffic conditions, and the like. In one embodiment, eta module 110 contains program logic to retrieve one or more of the user's movement parameters from real-time data acquisition component 102. Eta module 110 also contains program logic to determine one or more other movement parameters that may factor into calculating an estimated travel time from the user's current geographical location to a scheduled meeting destination, and to calculate an estimated time of arrival at the meeting destination.

Contact database 112 generally functions to store data and information regarding a user's one or more contacts such as, by way of example, associates, acquaintances, people, geographical locations, communication devices, and the like. In one embodiment, contact database 112 facilitates the association of one or more identifiable contact names with its respective contact information. A user of electronic scheduler 100 specifies the contact names. This allows the user of electronic scheduler 100 to specify an appointment location and any "target" of the appointment (e.g., who the appointment is with) by readily identifiable names. The contact information enables the user's electronic scheduler 100 to communicate with the contacts in order to, for example, notify the contacts that the user is going to be late for a scheduled meeting.

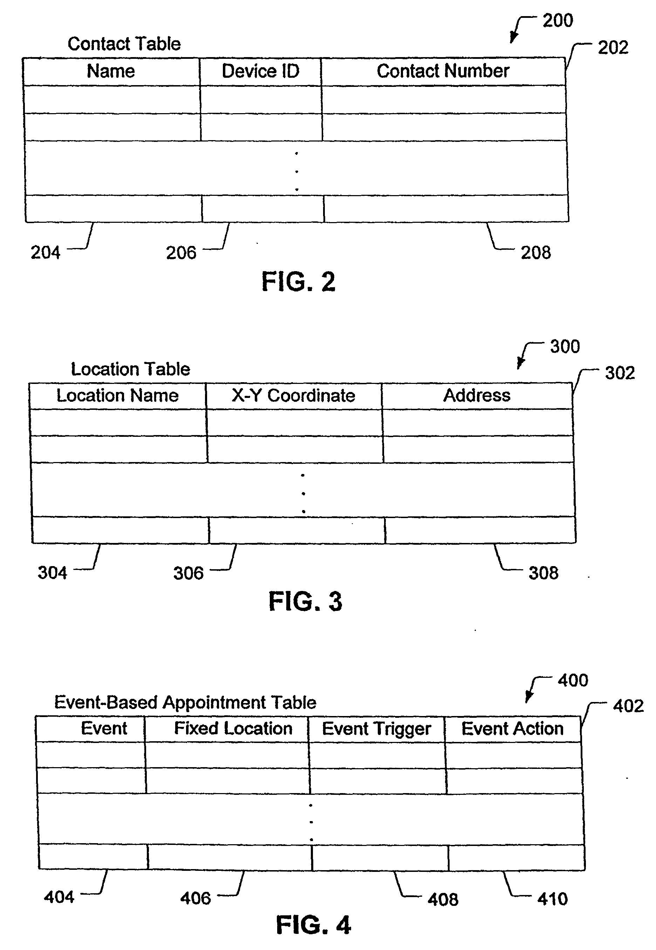

In one embodiment, contact database 112 can maintain contact information in a contact table 200. Figure 2 illustrates an exemplary contact table 200, according to one embodiment. As depicted, contact table 200 includes one or more contact records 202. By way of example, three fields are illustrated in each contact record 202 comprising a name 204, device ID 206, and contact number 208. One of ordinary skill in the art will realize that, for this record or any other record described herein, any number of fields may be broken down into additional subfields, one or more of the fields may be omitted, that additional fields can be added, and that the fields may be implemented as pointers to other fields or records. Moreover, one or more of the fields in a record may be optional and not contain data.

Name field 204 records the name of the contact, for example, as provided by the user of electronic scheduler 100. Device ID field 206 records a device identifier that is suitable for identifying the contact specified in the corresponding name field 204. In one embodiment, device ID field 206 is optional and, if provided, contains an identification associated with a portable device that is typically carried by the contact specified in name field 204. For example, a user may have specified the name "Joe" to identify an associate the user wishes to refer to by name in the user's electronic scheduler 100. Furthermore, Joe may own his own electronic scheduler 100 that has a real-time data acquisition component 102. The user can specify an identification code or number that is transmited by Joe's electronic scheduler 100. This identification number can be used to identify Joe and, in particular, Joe's electronic scheduler 100, and is stored in device ID field 206.

Alternatively, the user can place his or her electronic scheduler 100 near or in the proximity of the contact's portable device (e.g., electronic scheduler 100). The user can press a button on his or her electronic scheduler 100 that causes electronic scheduler 100 to read the identification code from the contact's portable device. Electronic scheduler 100 creates a new contact record 202 for the portable device and stores the identification code in device ID field 206. Electronic scheduler 100 can display an interface through which the user can specify a name to associate with the recently read and stored identification code. Electronic scheduler 100 can store the user provided name in name field 204 of contact record 202 corresponding to the contact's portable device.

Contact number field 208 records information and data that can be used to contact the person or location specified in the corresponding name field 204. In one embodiment, electronic scheduler 100 and, in particular, communication module 108 in electronic scheduler 100, uses the data and information stored in contact number field 208 to establish communication with the contact named in the corresponding name field 204. Contact number field 208 can include information, such as a phone number, an email address, a uniform resource locator, a fax number, and the like.

For example, Joe's electronic scheduler 100 may provide cellular communication capability, and thus, have an associated phone number. The user can specify the phone number of Joe's electronic scheduler 100 as Joe's contact information, and the phone number can be stored in contact number field 208. Alternatively, Joe may carry a cellular phone. The user can specify Joe's cellular phone number as Joe's contact information, and the cellular phone number can be stored in contact number field 208. The contact information stored in contact number field 208 can be Joe's fax number, Joe's office telephone number, Joe's home telephone number, Joe's email address, or other connection information that is suitable for establishing communication with an electronic device that is associated with Joe.

As another example, the user may have specified the name "executive conference room" to identify a particular conference room in the user's office building. A telephone may be in the conference room. The user can specify the telephone number of the telephone in the conference room as the contact information for the executive conference room, and the telephone number can be stored in contact number field 208 in the contact record 202 associated with the executive conference room. Device ID field 206 in the contact record 202 associated with the executive conference room may not store any data or information.

In another embodiment, contact record 202 may have one or more device ID fields 206 and one or more contact number fields 208. This allows a single contact to be associated with multiple device identifications and contact information. For example, Joe may also have a cellular telephone that has a Bluetooth compliant component. Here, one device ID field 206 can contain the identification code associated with Joe's electronic scheduler 100, and another device ID field 206 can contain the identification code associated with Joe's cellular telephone. Thus, Joe's electronic scheduler 100 or his cellular telephone can identify Joe.

Location database 114 generally functions to store data and information regarding geographical locations. In one embodiment, location database 114 facilitates the association of one or more identifiable location names to its respective geographical location. The electronic scheduler 100 user can specify the location name. This allows the user to refer to geographical locations by readily identifiable names. For example, the user can schedule an appointment by specifying the name of the location where the appointment is to take place. Furthermore, electronic scheduler 100 can associate the geographical location coordinates generated by, for example, real-time data acquisition component 102 with a location name specified by the user.

In one embodiment, location database 114 can maintain the association between location names and geographical location coordinates in a location table 300. Figure 3 illustrates an exemplary location table 300, according to one embodiment. As depicted, location table 300 includes one or more location records 302. By way of example, three fields are illustrated in each location record 302 comprising a location name field 304, x-y coordinate field 306, and address field 308. Location name field 304 records a name for a geographical location. X-y coordinate field 306 records the geographical location coordinates that are used by real-time data acquisition component 102 to identify the physical position or geographical location named in location name field 304. Address field 308 records a street address for the geographical location named in location name field 304.

For example, a user can proceed to a geographical location such as his or her office. At the desired location, the user can press, for example, a button on his or her electronic scheduler 100 to associate a name with the user's current geographical location. Pressing the button can cause real-time data acquisition component 102 to determine an x-y coordinate that identifies the user's present geographical location. Electronic scheduler 100 can display an interface through which the user can specify a name to associate with the present geographical location. A location record 302 is created to record the association between the user specified location name and the geographical location identification information (e.g., location name field 304 contains the name specified by the user and x-y coordinate field 306 contains the geographical location coordinate information used by real-time data acquisition component 102 to identify the geographical location).

In another embodiment, real-time data acquisition component 102 may include program logic and data that enable real-time data acquisition component 102 to identify geographical locations by street address. In this embodiment, address field 308 can contain the street address that is used by real-time data acquisition component 102 to identify the geographical location.

Associating a location name to a geographical location allows the user to create schedule entries using identifiable location names. For example, the user can specify "my airport" to identify his or her local airport. Subsequently, the user can create a schedule entry in his or her electronic scheduler 100 to "be at my airport at three o'clock in the afternoon on a particular day." Electronic scheduler 100 can then use location table 300 to convert "my airport" to its corresponding geographical location coordinates or street address, and determine, using real-time data acquisition component 102, if the user is at the specified destination (i.e., my airport) at or before the scheduled time.

Scheduling database 116 generally functions to store data and information regarding a user's event-based appointments or schedule. For example, a user can enter a scheduled appointment with his or her attorney at the attorney's office for a particular time and day. The data and information associated with this appointment (e.g., date, time, location, etc.) is recorded in scheduling database 116.

In one embodiment, electronic scheduler 100 provides the ability to enter schedules or appointments based on events (e.g., location, meeting one or more other persons, weather conditions, traffic conditions, market conditions, etc.). For example, a user can schedule a reminder based on an event in his or her electronic scheduler 100. Subsequently, the user's electronic scheduler 100 determines if the specified event occurs, and if the specified event occurs, electronic scheduler 100 generates thereminder associated with the event. Scheduling database 116 functions to store the data and information regarding the user's event-based schedules.

Scheduling database 116 can maintain the association between events and reminders in an event-based appointment table 400. Figure 4 illustrates an exemplary event-based appointment table 400, according to one embodiment. As depicted, event-based appointment table 400 includes one or more event-based appointment records 402. By way of example, four fields are illustrated in each event-based appointment record 402 comprising an event field 404, fixed location field 406, event-trigger field 408, and event action field 410.

Event field 404 records the event or event-based appointment specified by the user. Fixed location field 406 can be a flag that identifies the associated event as a "fixed" or "mobile" location. Event trigger field 408 records one or more triggers or events that cause the one or more associated event actions to occur. Event action field 410 records the one or more event actions that are triggered by the one or more triggers or events in event trigger field 408. The contents of event trigger field 408 and event action field 410 depend from the contents of event field 404. For example, the one or more event triggers (i.e., contents of event trigger field 408) and the one or more associated event actions (i.e., contents of event action field 410) are dependent or based on the associated event-based appointment (i.e., contents of event field 404). Furthermore, fixed location field 406 can then specify whether the associated event trigger is fixed or mobile.

Fixed location field 406 can be used to determine whether to identify the event using, for example, the geographical location functionality of real-time data acquisition component 102 or the proximity-based location functionality of real-time data acquisition component 102. In one embodiment, if proximity-based functionality is not provided in the user's electronic scheduler 100, electronic scheduler 100 may only permit its user to schedule event-based appointments for events occurring at fixed geographic locations. Alternatively, if geographical functionality is not provided in the user's electronic scheduler 100, electronic scheduler 100 may only permit its user to schedule event-based appointments for events occurring at non-fixed mobile (proximity) locations which are suitable for identification by, for example, proximity conformant transmissions.

In one embodiment, electronic scheduler 100 can determine the necessary event-related information to gather or obtain from the contents of event trigger field 408. For example, a user of electronic scheduler 100 can schedule an event-based appointment or reminder such as "I want to go skiing the next good powder day." This appointment or reminder can be stored or maintained in event field 404. Event trigger field 408 can then record "good snow condition" as the event trigger. Electronic scheduler 100 can then periodically acquire and check the snow condition information at one or more ski resorts, and from the reported snow conditions, undertake the action specified in the corresponding or depending event action field 410. For example, event action field 410 may specify that electronic scheduler 100 is to display a visual and/or audible reminder to go skiing to the user. Here, fixed location field 406 can specify the source (e.g., a remote computer) where electronic scheduler 100 can obtain snow condition information.

As another example, a user of electronic scheduler 100 can schedule an event-based appointment such as "ten o'clock tee time at XYZ golf course on a particular day." Event trigger field 408 can then record "rain," "snow," "inclement weather," or the like as the event trigger. Electronic scheduler 100 can then periodically acquire and check the weather condition on the day of the scheduled tee time, and from the reported weather condition, determine whether to undertake the action specified in corresponding event action field 410. For example, event action field 410 may have specified that electronic scheduler 100 is to cancel the user's scheduled tee time.

As still another example, a user of electronic scheduler 100 can schedule an event-based appointment or reminder such as "I want to know when Company X's stock reaches a price of $10.00." Event trigger field 408 can then record "Company X stock price of $10.00" as the event trigger. Electronic scheduler 100 can then periodically acquire and check the price of Company X stock, for example, through a wireless connection to a remote computer that is configured to provide stock prices, and from the reported stock price, undertake the action specified in corresponding event action field 410. For example, event action field 410 may have specified that electronic scheduler 100 is to display a visual and/or audible reminder to the user.

In one embodiment, a user of electronic scheduler 100 can provide or input the contents stored in event trigger field 408. In another embodiment, electronic scheduler 100 can determine the contents of event trigger field 408 from the contents of associated event field 404. For example, for an event-based appointment or reminder such as "I want to go skiing the next good powder day," electronic scheduler 100 can determine that the event trigger is "good snow conditions." Electronic scheduler 100 can then store this event trigger in the appropriate event trigger field 408. In other embodiments, electronic scheduler 100 can derive the contents of event trigger field 408 if the user does not provide an event trigger. When necessary, electronic scheduler 100 can require that the user provide one or more event triggers.

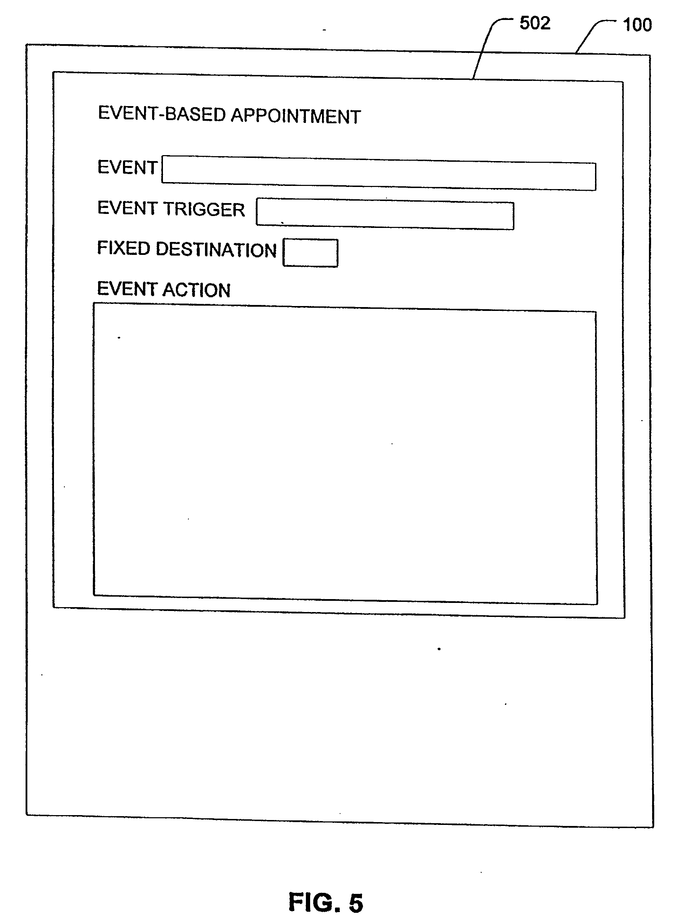

Figure 5 illustrates an exemplary user interface 502 for entering an event-based appointment, according to one embodiment. Electronic scheduler 100 can display user interface 502 on a display device coupled to electronic scheduler 100. User interface 502 provides text entry fields where the user can specify an event (e.g., the event-based appointment), an event trigger, whether or not the event is a fixed destination, and a depending event action or actions. Depending on the event-based appointment, one or more of the text entry fields may be optional. There may be one or more events or event triggers associated with one or more depending event actions.

For example, the user can enter an event-based appointment to "remind Bob to return the user's camera the next time the user sees Bob" in his or her electronic scheduler 100. To store this event-based appointment, the user can specify "Bob" or "when I see Bob" in the event text entry field, and specify the event action "remind Bob to return the user's camera" in the event action text entry field. In this example, the event trigger is substantially the same as the event and electronic scheduler 100 may be able to determine the event trigger from the event text entry field contents without the user having to enter the event trigger. Here, the event trigger text entry field may be optional, and if the user does not provide any input, electronic scheduler 100 can derive this information from the contents of event text entry field. In other embodiments or examples, the user may be required to enter one or more event triggers in the event trigger text entry field. There may be multiple event actions depending from a single event trigger or multiple event triggers. Because Bob is mobile (e.g., not fixed at one location), the user does not specify that Bob is a fixed location in the fixed destination text entry field.

Here, it is assumed that the user's electronic scheduler 100 can readily identify Bob. For example, Bob may have his own electronic scheduler 100 or other identifiable portable electronic device that can be used to identify Bob. Furthermore, it is assumed that the user created an entry for Bob as a contact in the user's electronic scheduler 100, and a contact record 202 exists that associates Bob with his electronic scheduler 100 or other identifiable portable electronic device. If the user's electronic scheduler 100 detects Bob's presence (e.g., detects Bob's electronic scheduler 100 or his identifiable portable electronic device) in its proximity, electronic scheduler 100 can undertake the corresponding event action (e.g., display the reminder "to remind Bob to return the camera" on the coupled display device). Detecting Bob's presence is the event or event trigger that needs to be satisfied before the depending event action is undertaken.

Electronic scheduler 100 creates an event-based appointment record 402 for each event-based appointment entered by the user. The data provided through user interface 502 can be stored in an event-based appointment record 402 that is created to store the event-based appointment. For example, the data in the event text entry field corresponds to the data in event field 404, the data in the fixed destination text entry field corresponds to the data in fixed location field 406, the data in the event trigger text entry field corresponds to the data in event trigger field 408, and the data in the event action text entry field corresponds to the data in event action field 410.

As another example, the user can enter an event-based appointment to have his or her electronic scheduler 100 display a to-do list the next time the user is at a particular shopping mall. The shopping mall name can be entered in the event text entry field in user interface 502 and stored in event field 404. In one embodiment, electronic scheduler 100 can determine the event trigger (i.e., the contents of event trigger text entry field) from the contents of the event text entry field. In another embodiment, the user can specify the event trigger (e.g., the shopping mall name). This assumes that the user previously associated the shopping mall name with the shopping mall location (e.g., a location record 302 exists for the shopping mall). The to-do list that is to be displayed can be entered in the event action text entry field in user interface 502. Furthermore, because the shopping mall is at a fixed location (e.g., not mobile), the user can specify that the event is a fixed location in the fixed destination text entry field in user interface 502. If the user's electronic scheduler 100 detects that the user is at the specified shopping mall, electronic scheduler 100 can display the to-do list on the coupled display device.

Alternatively, the user may be permitted to specify a filename whose contents are to be displayed in the event action text entry field in user interface 502. The filename may be a reference to a text file that contains a text reminder that is displayed when the associated event occurs (i.e., event trigger is satisfied). In another embodiment, the filename may be a reference to a voice file that contains a recorded voice message. For example, electronic scheduler 100 may provide a recording function that enables the user to record a message. Electronic scheduler 100 may store the user's message in a voice file. The user may then be permitted to specify a reference (e.g., filename) of the voice file containing the appropriate recorded message in the event action text entry field in user interface 502. Electronic scheduler 100 can then play the specified voice message when the associated event occurs.

In another embodiment, the user can specify an action that his or her electronic scheduler 100 is to perform when the associated event occurs. For example, electronic scheduler 100 may support one or more application programs, and one such program may be an email program. The user can then have electronic scheduler 100 execute one or more application programs when a particular event occurs. The triggering event can be specified in the event trigger text entry field and the application programs may be specified in the event action text entry field in user interface 502. For example, the user can schedule an event-based appointment that causes electronic scheduler 100 to transmit an email message when the associated event occurs.

In one embodiment, electronic scheduler 100 may support a voice interface through which the user can enter schedule information. For example, the user can state a scheduled appointment, and the specifics of the appointment, into a microphone coupled to electronic scheduler 100. Electronic scheduler 100 may contain program logic that appropriately interprets the speech input to create the necessary records to maintain the user's scheduled appointment. In another embodiment, electronic scheduler 100 may support a communication port or interface for coupling to a remote device. Once coupled, electronic scheduler 100 can receive schedule information from the remote device. For example, electronic scheduler 100 can couple to and synchronize with schedule information stored on a personal computer.

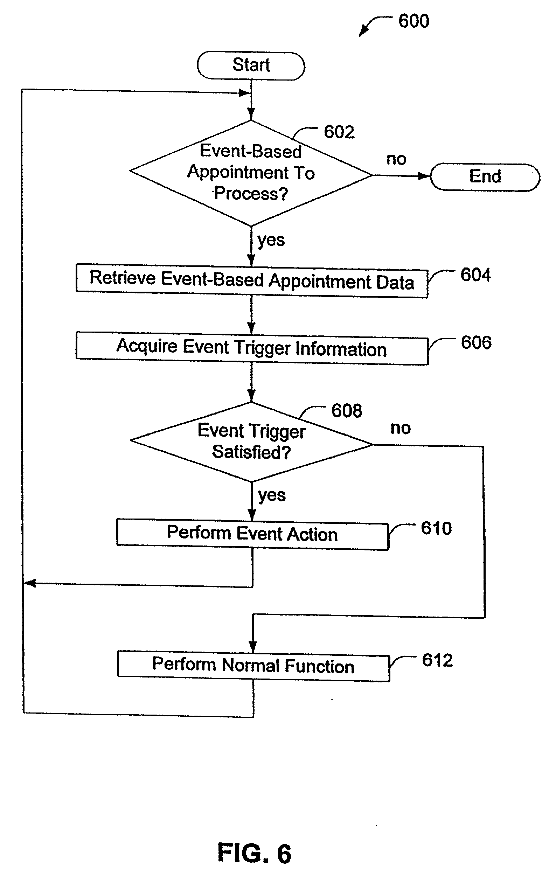

Figure 6 illustrates a flow chart of an exemplary method 600 for augmenting event-based appointment schedules with real-time information. Beginning at a start step, electronic scheduler 100 determines if there is an event-based appointment to process at step 602. In one embodiment, electronic scheduler 100 can check for event-based appointments when it is first powered on or subsequent to the user entering an event-based appointment. In another embodiment, electronic scheduler 100 can periodically check, for example, every one hour, if there is an event-based appointment to process. If there is an event-based appointment to process, electronic scheduler 100 can periodically execute, for example, every one-half hour, to process any event-based appointments.

If, at step 602, electronic scheduler 100 determines that there are no event-based appointments, electronic scheduler 100 ends processing. Alternatively, if electronic scheduler 100 determines that there are one or more event-based appointments to process, then, at step 604, event handler module 106 retrieves an event-based appointment to process. Event handler module 106 retrieves data and information associated with the event-based appointment from, for example, scheduling database 116. From the retrieved data, event handler module 106 determines the event trigger associated with the event-based appointment. At step 606, event handler module 106 determines from the event trigger the information that needs to be acquired (i.e., the event-related information) and acquires the information necessary to determine if the event trigger is satisfied. Examples of the types of acquired information include, without limitation, geographic location, proximity location, weather conditions, market conditions, economic condition, traffic condition, travel information, as well as any other data or information suitable for use in specifying an event-based appointment or event trigger. Event handler 106 can utilize real-time data acquisition component 102 to acquire information necessary to determine if the event trigger is satisfied.

At step 608, event handler module 106 determines if the event trigger corresponding to the event-based appointment is satisfied. If event handler module 106 determines that the event trigger is not satisfied, then, at step 612, event handler module 106 performs it normal function. Event handler module 106 does not perform the event action associated with the event-based appointment. Having performed its normal function, event handler module 106 returns to step 602 and continues processing, for example, other event-based appointments. Alternatively, if event handler module 106 determines that the event trigger is satisfied (step 608), event handler module 106, at step 610, undertakes or performs the event action associated with the event-based appointment. For example, the event action is specified in the event action field 410 of the corresponding event-based appointment record 402. Event handler module 106 can set a flag to indicate that the event-based appointment has been processed. Having delivered the reminder, electronic scheduler 100 returns to step 602 and continues processing.

Those of ordinary skill in the art will appreciate that, for this and other methods disclosed herein, the functions performed in the exemplary flow charts may be implemented in differing order. Furthermore, steps outlined in the flow charts are only exemplary, and some of the steps may be optional, combined into fewer steps, or expanded into additional steps without detracting from the essence of the invention.

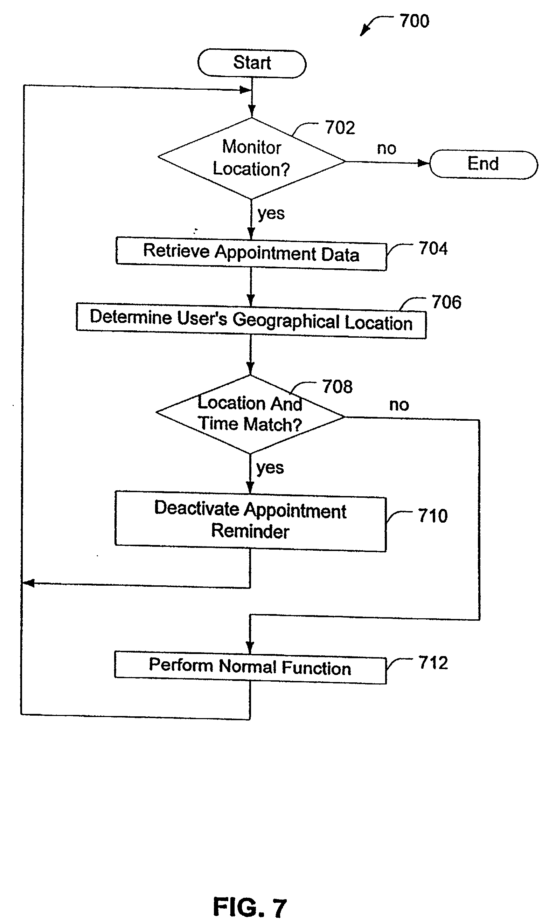

Figure 7 illustrates a flow chart of an exemplary method 700 for augmenting schedule data in real-time, according to one embodiment. Beginning at a start step, a user enters schedule information in his or her electronic scheduler 100. For example, the user may have a dentist appointment at four o'clock this afternoon, at the user's dentist's office. It is assumed that this appointment information is entered into the user's electronic scheduler 100. It is also assumed that the user named the geographical location coordinates for the user's dentist's office as, for example, "my dentist's office" in his or her electronic scheduler 100.

At step 702, electronic scheduler 100 determines if it should monitor the user's location to alert the user of the user's next scheduled appointment. In particular, event handler module 106 retrieves the time of the user's next scheduled appointment and compares the appointment time to the current time. In one embodiment, event handler module 106 monitors the user's geographical location from a predetermined time, for example, one hour, before a scheduled appointment time. Event handler module 106 then periodically monitors the user's location, for example, every fifteen minutes, until the user's location need not be monitored further (e.g., the scheduled appointment time passes, the user turns off the notification function, electronic scheduler 100 determines that the user is at the scheduled destination at the scheduled time or within a predetermined time window of the scheduled time, etc.). Electronic scheduler 100 may enable the user to alter or vary the predetermined time, predetermined time window, and/or the periodic time. In another embodiment, event handler module 106 periodically monitors, for example, every fifteen minutes, the user's geographical location. In still another embodiment, event handler module 106 can continuously monitor the user's location when electronic scheduler 100 is turned on.

If, at step 702, event handler module 106 determines it should monitor the user's geographic location, then, at step 704, event handler module 106 retrieves the user's appointment data from, for example, scheduling database 116. For example, assuming that the user's electronic scheduler is configured to monitor the user's location starting from one hour prior to the user's next scheduled appointment time, that the user's dentist appointment is the next scheduled appointment, and that the current time is three o'clock, event handler module 106 retrieves from scheduling database 116 the data and information corresponding to the user's dentist appointment at four o'clock.

At step 706, event handler module 106 utilizes real-time data acquisition component 102 to determine the user's current geographical location. At step 708, event handler module 106 determines if user's current geographical location matches the location or destination of the user's next scheduled appointment. Event handler module 106 also determines if the current time is within a predetermined time window of the scheduled appointment time. Continuing the dentist appointment example, event handler module 106 determines if the user is currently at the dentist's office (e.g., the user's current geographical location matches the geographic location coordinates for the dentist's office) at or around the scheduled appointment time.

If, at step 708, event handler module 106 determines that the user is at the appointment location or destination at or around the scheduled appointment time, then, at step 710, event handler module 106 deactivates the alarm, notification, or reminder function in the user's electronic scheduler 100. In one embodiment, event handler module 106 may set a flag or notification to indicate that the particular appointment has been processed. Thus, electronic scheduler 100 does not unnecessarily remind the user of a scheduled appointment if the user is already at the appointment location at or around the scheduled appointment time. Having deactivated the reminder function, electronic scheduler 100 returns to step 702 to process the next or other scheduled appointments or meetings.

If, at step 708, event handler module 106 determines that the user is not at the appointment location or destination at or around the scheduled appointment time, then, at step 712, event handler module 106 does not deactivate the notification function in electronic scheduler 100. Rather, electronic scheduler 100 performs its normal function. For example, electronic scheduler 100 may sound an audible warning and/or display a message notifying the user of the next scheduled meeting. In one embodiment, electronic scheduler 100 may start reminding its user of a scheduled meeting from a predefined time period prior to the scheduled appointment time. The user may configure the predefined time period. Having appropriately notified the user, electronic scheduler 100 returns to step 702 and continues processing.

If, at step 702, event handler module 106 determines it should not monitor the user's geographic location, event handler module 106 ends processing. For example, assuming that electronic scheduler 100 is configured to monitor the user's geographic location one hour before a scheduled appointment time, and to periodically monitor the geographic location every fifteen minutes, event handler module 106 may determine that it is not one hour prior to a scheduled appointment time, that fifteen minutes have not elapsed since the previous time the user's location was monitored, that the user is at the scheduled appointment destination at or around the scheduled appointment time, or that the current time is past the scheduled appointment time. In one embodiment, if the user's location requires further monitoring, event handler module 106 may schedule itself to execute again at the appropriate time (e.g., after fifteen minutes), and stop executing.

In one embodiment, electronic scheduler 100 provides its user the ability to specify a proximity range. Electronic scheduler 100 can use the proximity range feature to determine if the user is at an appointment destination or within the specified proximity range, and if so, electronic scheduler 100 can deactivate the notification function.

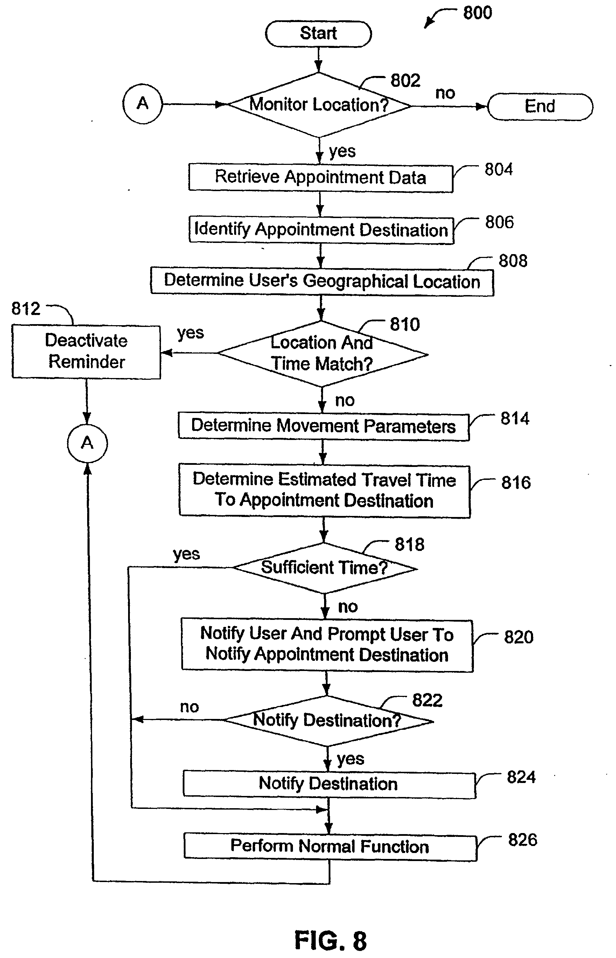

Figure 8 illustrates a flow chart of an exemplary method 800 for augmenting schedule data and notifying the appointment destination in real-time, according to one embodiment. Beginning at a start step, it is assumed that electronic scheduler 100 currently stores a scheduled appointment for its user. Continuing the previous dentist appointment example, the user may have entered his or her four o'clock dentist appointment at the dentist's office this afternoon into his or her electronic scheduler 100.

At step 802, event handler module 106 determines if it should monitor the user's location to alert the user of the user's next scheduled appointment. In one embodiment, event handler module 106 starts monitoring the user's location from a predetermined time prior to the user's next scheduled appointment time. In another embodiment, event handler module 106 starts monitoring the user's location at a time sufficient to permit the user to travel to the appointment destination in time for the scheduled appointment.

For example, event handler module 106 can utilize real-time data acquisition component 102 to determine the user's current geographical location. Event handler module 106 then can utilize eta module 110 to determine the time the user needs to travel from his or her current location to the appointment destination. Event handler module 106 can start to monitor the user's location from a point in time before the appointment time, where the time period (period of time from the point in time to the appointment time) is sufficient for the user to travel to the appointment destination. The time period may be the time needed to travel to the appointment destination plus an additional predetermined time amount, for example, thirty minutes. For example, assuming that the current time is three o'clock, that the user has a four o'clock dentist appointment, and that event handler module 106 determines that it will take forty-five minutes for the user to travel to the dentist office from the user's current location, event handler module 106 can start monitoring the user's location. Furthermore, event handler module 106 may periodically notify the user of his or her dentist appointment.

If, at step 802, event handler module 106 determines it should not monitor the user's location, event handler module 106 ends processing. Alternatively, if, at step 802, event handler module 106 determines it should monitor the user's location, then, at step 804, event handler module 106 retrieves the user's appointment data from, for example, scheduling database 116. At step 806, event handler module 106 determines the destination or location of the user's next appointment. At step 808, event handler module 106 utilizes real-time data acquisition component 102 to determine the user's current geographical location.

At step 810, event handler module 106 determines if user's current geographical location and current time matches the location or destination and appointment time of the user's next scheduled appointment. The current time may be within a predetermined time window, for example, fifteen minutes, of the scheduled appointment time. The predetermined time window may be a default value or a user configurable value. Continuing the dentist appointment example, event handler module 106 determines if the user is currently at the dentist's office (e.g., the user's current geographical location matches the geographic location coordinates for the dentist's office) at a time that is within the predetermined time window.

If, at step 810, event handler module 106 determines that the user is at the appointment location or destination within the time window of the scheduled appointment time, then, at step 812, event handler module 106 deactivates the alarm, notification, or reminder function in the user's electronic scheduler 100. In one embodiment, event handler module 106 may set a flag or notification to indicate that the particular appointment has been processed. Having deactivated the reminder function, electronic scheduler 100 returns to step 802 to process the next or other scheduled appointments or meetings.

If, at step 810, event handler module 106 determines that the user is not at the appointment location or destination at a time that is within the predetermined time window of the scheduled appointment time, then, at step 814, event handler module 106 determines the user's movement parameters, such as, by way of example, direction of movement, speed, weather conditions, traffic conditions, and the like. In one embodiment, real-time data acquisition component 102 provides one or more of the movement parameters, and event handler module 106 obtains the movement parameters from real-time data acquisition component 102. At step 816, event handler module 106 utilizes eta module 110 to estimate a time necessary for the user to travel from his or her current location to the appointment destination. Event handler module 106 can also determine the user's estimated time of arrival at the appointment destination.

At step 818, event handler module 106 determines if there is sufficient time for the user to reach the appointment destination in time for the appointment. If event handler module 106 determines that the user has sufficient time to reach the appointment destination in time for the appointment, then, at step 826, electronic scheduler 100 performs its normal function. For example, electronic scheduler 100 may determine that it should sound an audible warning and/or display a message notifying the user of the next scheduled meeting. In one embodiment, electronic scheduler 100 may start reminding its user of a scheduled meeting from a predefined time period plus the calculated time needed to travel to the appointment destination prior to the scheduled appointment time. The user may configure the predefined time period. Having appropriately notified the user, electronic scheduler 100 returns to step 802 and continues processing.

If, at step 818, event handler module 106 determines that the user does not have sufficient time to reach the appointment destination in time for the appointment, then, at step 820, event handler module 106 can notify the user that he or she is going to be late for the schedule appointment. For example, event handler module 106 can sound an audible notification or display the notification on a display device coupled to electronic scheduler 100. Event handler module 106 can display a message that asks the user if the user wants to notify the appointment destination that the user is going to be late for the appointment.

In one embodiment, event handler module 106 can display a list containing the appointment destination and/or the one or more persons that are to be present at the appointment. The persons may be the appointment attendees with whom the user has the appointment. Event handler module 106 can retrieve this information from contact database 112 and scheduling database 116. The user can then specify the contacts he or she wants notified by selecting the appropriate entries in the displayed list.

At step 822, event handler module 106 determines if the user requested to notify the appointment destination and/or any of the appointment attendees. If the user elected not to notify the appointment destination, then at step 826, electronic scheduler 100 performs its normal function and returns to step 802 and continues processing. Alternatively, if, at step 822, the user elected to notify one or more of the appointment destination and/or appointment attendees, then at step 824, event handler module 106 utilizes communication module 108 to appropriately notify the contacts specified by the user.

For example, communication module 108 can determine each contact's contact number from the appropriate contact record 202. Communication module 108 can then send a notification to the contacts using the respective contact numbers. In one embodiment, the notification may include the user's estimated time of arrival at the appointment destination. In another embodiment, the notification may include a personal message recorded by the user. At step 826, electronic scheduler 100 performs its normal function and returns to step 802 and continues processing.

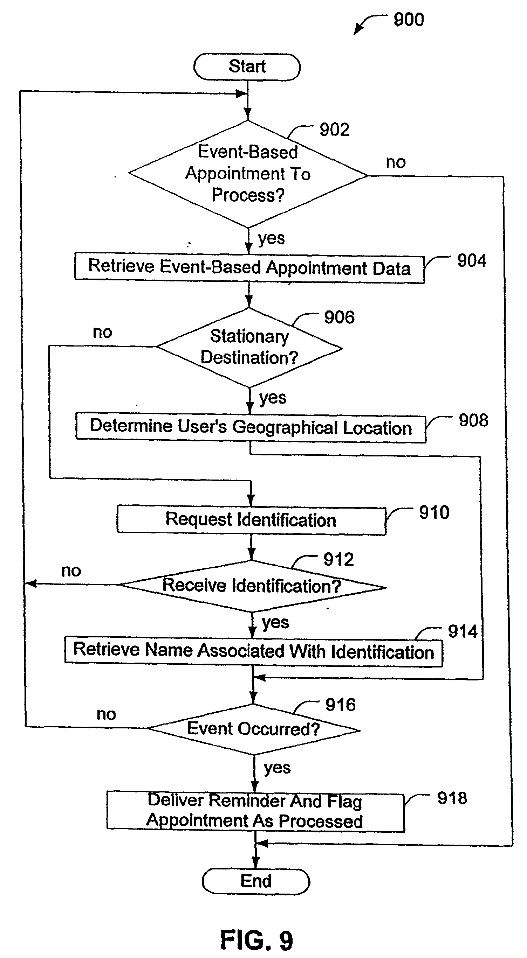

Figure 9 illustrates a flow chart of an exemplary method 900 for generating an event-based appointment reminder, according to one embodiment. Beginning at a start step, electronic scheduler 100 determines if there is an event-based appointment to process at step 902. In one embodiment, electronic scheduler 100 can check for event-based appointments when it is first powered on or subsequent to the user entering an event-based appointment. In another embodiment, electronic scheduler 100 can periodically check, for example, every one hour, if there is an event-based appointment to process. If there is an event-based appointment to process, electronic scheduler 100 can periodically execute, for example, every one-half hour, to process any event-based appointments.

If, at step 902, electronic scheduler 100 determines that there are no event-based appointments, electronic scheduler 100 ends processing. Alternatively, if electronic scheduler 100 determines that there are one or more event-based appointments to process, then, at step 904, event handler module 106 retrieves an event-based appointment to process. In particular, event handler module 106 retrieves data and information associated with the event-based appointment from, for example, scheduling database 116. At step 906, event handler module 106 determines if the event-based appointment is associated with a stationary destination.

If the event-based appointment is associated with a stationary destination, then, at step 908, event handler module 106 utilizes real-time data acquisition component 102 to determine the user's current geographical location. For example, real-time data acquisition component 102 can determine the geographical location coordinates associated with the user's current location. Alternatively, if, at step 906, event handler module 106 determines that the event-based appointment is not associated with a stationary destination (e.g., the event is mobile), then at step 910, event handler module 106 utilizes real-time data acquisition component 102 to determine a proximity location. For example, real-time data acquisition component 102 transmits a request to receive an identification code from any compatible electronic device that is within transmission range. For example, real-time data acquisition component 102 can transmit a request to receive identification codes from, for example, other interoperable electronic devices (e.g., other electronic devices capable of communicating identification codes with electronic scheduler 100) that are within transmission range of electronic scheduler 100.

At step 912, real-time data acquisition component 102 determines if an identification code transmitted by a compatible electronic device is received. If an identification code is not received, electronic scheduler 100 returns to step 902 and continues processing. If, at step 912, an identification code is received, then, at step 914, event handler module 106 retrieves a name associated with the received identification code from, for example, contact database 112. If the identification code does not match a name stored in contact database 112 and, in particular, contact table 200, electronic scheduler 100 returns to step 902 and continues processing. In another embodiment, if the identification code does not match a name, electronic scheduler 100 may prompt the user to see if the user wants to associate a name with the received identification code. If the user elects to associate a name to the received identification code, electronic scheduler 100 can receive from the user a name and create a contact record 202 in contact table 200 for the identification code.

If event handler module 106 retrieves a name associated with the received identification code (step 914) or subsequent to determining the user's current geographical location (step 908), event handler module 106, at step 916, determines if the event corresponding to the event-based appointment occurred. In particular, event handler module 106 determines if user's current geographical location matches the event, or if the name associated with the received identification code matches the event.

If, at step 916, event handler module 106 determines that the event corresponding to the event-based appointment did not occur, event handler module 106 returns to step 902 and continues processing, for example, other event-based appointments. Alternatively, if event handler module 106 determines that the event corresponding to the event-based appointment did occur, event handler module 106, at step 918, delivers the reminder (e.g., from the event action field 410 of the corresponding event-based appointment record 402) associated with the event-based appointment to the user. Event handler module 106 can set a flag to indicate that the event-based appointment has been processed. For example, event handler module 106 can display the reminder on a display device coupled to electronic scheduler 100 and/or play and audible reminder through a speaker coupled to electronic scheduler 100. Having delivered the reminder, electronic scheduler 100 returns to step 902 and continues processing.

This invention may be provided in other specific forms and embodiments without departing from the essential characteristics as described herein. The embodiments described above are to be considered in all aspects as illustrative only and not restrictive in any manner. The following claims rather than the foregoing description indicate the scope of the invention.

## Claims

1. A method for augmenting an event-based appointment in an electronic scheduler (100) in real-time, the method comprising: retrieving an appointment data associated with an appointment(604),the appointment data comprising an event trigger (408) and one or more event actions (410) depending an the event trigger (408); acquiring event-related information based an the event trigger (606), the event-related information capable of determining if the event trigger is satisfied; determining if the acquired event-related information satisfies the event trigger (608); and in response to determining that the event trigger is satisfied, performing the one or more event actions (610).

2. The method of Claim 1, wherein the retrieving an appointment (604), acquiring an event-related information (606), determining if the acquired event-related information satisfies the event trigger (608), and performing the one or more event actions (610) steps are periodically executed.

3. The method of Claim 2, wherein the retrieving (604), acquiring (606), determining (608), and performing (610) steps are periodically executed starting from a predetermined time before an appointment time associated with the event-based appoinhnent.

4. The method of Claim 1 further comprising:
determining movement parameters of the electronic scheduler (814); determining an estimated time of arrival at an event-based appointment location (816) using the movement parameters, the event based appointment location being dependent an the appointment; and notifying a target of the event-based appointment if the estimated time of arrival is beyond an appointment time associated with the event-based appointment(824).

5. A method for transmitting a notification to one or more meeting attendees, the method comprising:
retrieving a meeting data associated with a scheduled meeting (804), the meeting data provided by a user of a portable electronic scheduler (100), the meeting data comprising a meeting time, meeting location, and one or more meeting attendees; determining a present geographical location of the user based an the location of the user's portable electronic scheduler (806); determining whether the present geographical location matches the meeiing location (810); determining whether the present time is substantially the meeting time (810); in response to determining that the present geographical location does not match the meeting location or that the present time is not substantially the meeting time, determining the user's movement parameters (814); determining an estimated time of arrival at the meeting location (816), the estimated time of arrival determined from the user's present geographical location and the user's movement parameters; determining whether the estimated time of arrival is past the meeting time (818); and in response to determining that the estimated time of arrival is past the meeiing time, notifying the one or more meeting attendees (824).

6. A portable electronic scheduler (100) suitable to accompany a user ofthe portable electronic scheduler, the portable electronic scheduler comprising: a storage device (116) configured to store event information (400), the storage device (116) storing data cosesponding to an event, wherein the data comprises an event trigger (408) and one or more event actions (410) depending an the event trigger (408); and a module (106) coupled to the storage device (116), the module (106) operable to obtain event-related information based an the event trigger (408), the module (106) operable to determine if the event trigger (408) is satisfied, the module (106) operable to initiate the performance of the one or more event aciions (410) in response to detennining that the event trigger (408) is satisfied.

7. The portable electronic scheduler (100) of Claim 6, wherein the event trigger (408) comprises an event time and event location.

8. The portable electronic scheduler (100) of Claim 6, wherein the one or more event aciions (410) comprises generating a reminder an the portable electronic scheduler (100).

9. The portable electronic scheduler (100) of Claim 6, wherein the one or more event actions (410) comprises executing a program an the portable electronic scheduler (100).

10. The portable electronic scheduler (100) of Claim 6, wherein the one or more event actions (410) comprises transmitting a notification.
